# EUROPEAN PATENT APPLICATION

(11) **EP 2 562 433 A1**
(43) Date of publication of application: **27.02.2013**
(21) Application number: 12179475.4
(22) Date of filing: 07.08.2012
(51) Int. Cl.: F16B 5/02, F16B 41/00, H02K 3/51

(54) **Rotor of an electric machine and screw**

(30) Priority: 23.08.2011 EP 11178388
(71) Applicant: ALSTOM Hydro France, 92300 Levallois Perret (FR)
(72) Inventor: Okai, Ricardo, 5442 Fislisbach (CH)
(74) Representative: Pesce, Michele

(57) **Abstract**

The screw (20) includes a rod (25) and a head (26). The rod (25) has a first end (27), a second end (28) and a central portion (29) between them, the head (26) is made in a separate piece from the rod (25). The first end (27) of the rod (25) is threaded, a terminal part (30) of the first end (27) facing away from the second end (28) is not threaded, the head (26) has a threaded hole (31) and is screwed into the rod first end (27).

## Description

### TECHNICAL FIELD

The present invention relates to a rotor of an electric machine and a screw.

### BACKGROUND

Electric machines include a stator and a rotor; the rotor includes a core and shafts at its ends and has a plurality of longitudinal slots. The rotor also includes windings having a portion housed within the slots (slot or straight part) and enveloping portions outside of the slots at the core ends (end windings of winding overhangs).

The end windings must withstand large forces (for example centrifugal forces) and are thus reinforced by a stiffening structure.

The stiffening structures include tapes bended around the end windings and impregnated with a resin that is then cured.

These structures have the drawbacks that large machines are needed to wrap the tape around the end windings with the correct tension; to be used these machines must be brought to the yard and this could not be easy. In addition, in case at the end of wrapping defects are found (such as for example short circuits are found during the final tests), all the stiffening structure made of impregnated tape must be removed to fix the problem.

To solve these problems, US 5 635 785 discloses a rotor with a core, shafts extending from the core ends and, in addition, enlarged cylindrical portions between each shaft and the core. These cylindrical portions have slots that house supports for the end windings; the supports include blocking elements and screws; the blocking elements can be blocked within the slots of the cylindrical portions and clamp the end windings, and the screws can tighten the blocking elements and the end windings together.

The screws are made from one single element, by removing material to define a screw head and a threaded screw rod.

Nevertheless, the screws and in particular their heads must withstand high stress and there is the risk that during operation the heads break and fly away. This must be prevented.

In this respect a number of attempts have be done for example by providing the screws in their zone between head and rod with throats, junctions or stiffening elements, but the results have been unsatisfactory.

### SUMMARY

An aspect of the present invention is thus to provide a screw and a rotor using it that are reliable and have limited risks of screw head breakage.

This and further aspects are attained according to the invention by providing a rotor and a screw in accordance with the accompanying claims.

### BRIEF DESCRIPTION OF THE DRAWINGS

Further characteristics and advantages of the invention will be more apparent from the description of a preferred but non-exclusive embodiment of the rotor and screw, illustrated by way of non-limiting example in the accompanying drawings, in which:

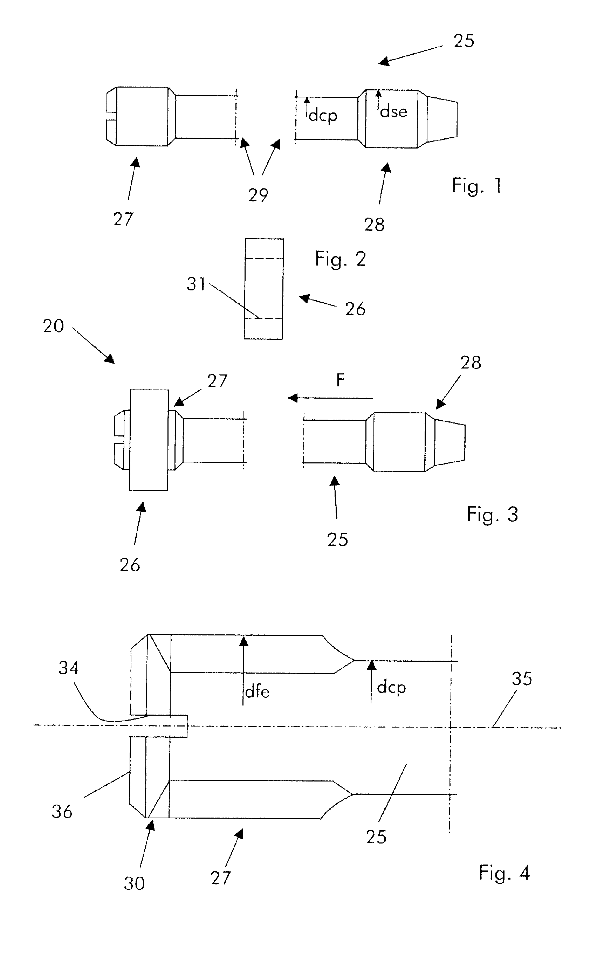

Figures 1 and 2 are schematic views of a rod and a head of a screw in an embodiment of the invention; in these figures the dimensions are exaggerated for clarity;
Figure 3 shows a schematic view of an embodiment of a screw having the rod and head of figures 1 and 2;
Figure 4 schematically shows, enlarged, an part of the rod of figure 1 arranged to receive the head of figure 2;
Figure 5 shows an electric machine to be used together with the screw; and
Figure 6 shows a portion of a support of the electric machine of figure 5 with the screws of figure 3.

### DETAILED DESCRIPTION OF EMBODIMENTS OF THE INVENTION

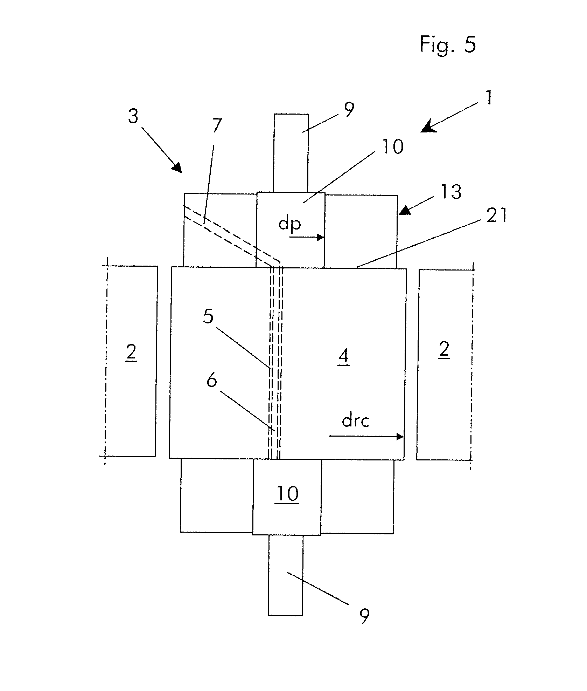

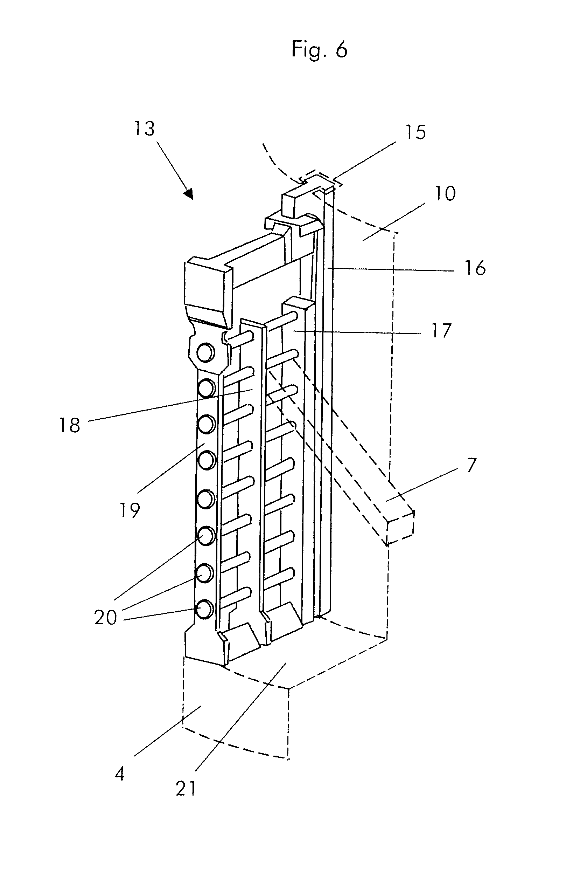

In the following the electric machine is described first with reference to figures 5 and 6.

The electric machine 1 (such as a hydro generator) has a stator 2 with a rotor 3.

The rotor 3 includes a rotor core 4 with slots 5; the rotor 3 also includes windings having a straight part or slot part 6 housed in the slots 5, and end windings or winding overhangs 7 outside of the slots 5.

The rotor core 4 also includes shafts 9 at its opposite ends and enlarged cylindrical portions 10 extending from the rotor core 4 in positions between each shaft 9 and the core 4.

The end windings 7 envelop the portions 10 and are connected to supports 13 in turn connected to the portions 10.

In this respect, the portions 10 have a plurality of seats such as longitudinal slots 15 and the supports 13 have first elements 16 (for example bar shaped elements) housed in the slots 15, second elements 17 (for example bar shaped elements) adjacent to the first elements 16 (but outside of the slots 15), third element 18 (bar shaped spacers between adjacent end windings) at a distance from the second elements 17, and fourth elements 19 (for example bar shaped elements) at a distance from the third elements 18. In addition, a number of screws 20 are provided connecting all the elements 16, 17, 18, 19 together; in particular the screws 20 penetrate the fourth elements 19, third elements 18, second elements 17 and are connected (screwed) into threaded seats of the first elements 16.

A number of seats are defined:
- between adjacent screws 20 and second elements 17 and third elements 18, and/or (according to the configuration of the machine)
- between adjacent screws 20 and third elements 18 and fourth elements 19;
in these seats the end windings 7 are housed to be clamped and firmly held counteracting centrifugal forces, vibrations and any other forces urging them.

As shown, the rotor core 4 has a first diameter drc and the portions 10 have a second diameter dp smaller than the first diameter drc defining protruding end walls 21; the supports 13 rest on these end walls 21 of the core 4.

Each screw 20 comprises a rod 25 and a head 26; both rod 25 and head 26 are made out of a non-electrically conducting material such as glass fibres.

The head 26 is made in a separate piece from the rod 25.

The rod 25 has a first end 27, a second end 28 and a central portion 29 between them.

The first end 27 of the rod 25 is threaded, but a terminal part 30 of the first end 27 facing away from the second end 28 is not threaded. The terminal part 30 prevents the head 26 from unscrewing from the rod 25. For example the terminal part 30 of the first end 27 can have substantially the same diameter dfe as the threaded part.

The head 26 has a threaded hole 31 and is screwed into the rod first end 27.

Advantageously, the diameter dfe of the first end 27 is larger than the diameter dcp of the central portion and the central portion 29 is not threaded.

The second end 28 is threaded (to be connected to the threaded seats of the first element 16).

Preferably the diameter dse of the second end 28 is larger than the diameter dcp of the central portion 29.

In an embodiment, the diameter dse of the second end 28 can be smaller than the diameter dfe of the first end 27 to help the introduction of the head 26 onto the rod 25.

In addition the rod 25 also has a notch 34 to operate a screwdriver; in this respect the rod 25 has a longitudinal axis 35 and a face 36 at the rod first end 27 intercepting the longitudinal axis 35 has the notch 34.

The operation of the rotor and screw is apparent from that described and illustrated and is substantially the following.

First the screws 20 are assembled; thus the heads 26 are inserted onto the rods 25 as indicated by the arrow F; then the rods 25 are screwed into the heads 26. Advantageously the connection achieved in very stiff and the risk of breakage is limited, because there are no zones where the breakage can start. In addition the risk of unscrewing is limited because the terminal portions 30 of the rods 25 are not threaded. Thus when the heads 26 are tightened on the rods 25 very stiff and reliable screws 20 are defined.

Thus the first elements 16 are inserted into the slots 15, the second elements 17 are also provided, thus a first row of end windings is arranged enclosing the portions 10; the third elements 18 are then provided and a second row of end windings is provided. Finally the fourth elements 19 are provided and the connections are tightened by the screws 20 that are inserted into aligned holes of the fourth elements 19, third elements 18, second elements 17 and are screwed into the seats of the first elements 16.

Naturally the features described may be independently provided from one another.

In practice the materials used and the dimensions can be chosen at will according to requirements and to the state of the art.

### REFERENCE NUMBERS

- 1: electric machine
- 2: stator
- 3: rotor
- 4: rotor core
- 5: slot
- 6: slot part of winding
- 7: end winding part of winding
- 9: shaft
- 10: portion
- 13: support
- 15: seat of 10
- 16: first element of 13
- 17: second element of 13
- 18: spacer of 13
- 19: third element of 13
- 20: screw
- 21: end wall of 4
- 25: rod of 20
- 26: head of 20
- 27: first end of 25
- 28: second end of 25
- 29: central portion of 25
- 30: terminal part of 27
- 31: threaded hole of 26
- 34: notch
- 35: longitudinal axis of 25
- 36: face
- dfe: diameter first end
- dse: diameter second end
- dcp: diameter central portion
- drc: diameter of the rotor core
- dp: diameter of the portion 10
- F: arrow

## Claims

1. Screw (20) comprising a rod (25) and a head (26), **characterised in that**:
- the rod (25) has a first end (27), a second end (28) and a central portion (29) between them,
- the head (26) is made in a separate piece from the rod (25),
- the first end (27) of the rod (25) is threaded,
- a terminal part (30) of the first end (27) facing away from the second end (28) is not threaded,
- the head (26) has a threaded hole (31) and is screwed into the rod first end (27).

2. Screw (20) according to claim 1, **characterised in that** a diameter (dfe) of the first end (27) is larger than the diameter (dcp) of the central portion (29).

3. Screw (20) according to claim 1, **characterised in that** the central portion (29) is not threaded.

4. Screw (20) according to claim 1, **characterised in that** the second end (28) is threaded.

5. Screw (20) according to claim 1, **characterised in that** a diameter (dse) of the second end (28) is larger than the diameter (dcp) of the central portion (29).

6. Screw (20) according to claim 2 and 5, **characterised in that** the diameter (dse) of the second end (28) is smaller than the diameter (dfe) of the first end (27).

7. Screw (20) according to claim 1, **characterised in that** the rod (25) has a longitudinal axis (35) and **in that** a face (36) at the rod first end (27) intercepting the longitudinal axis (35) has at least a notch (34).

8. Rotor (3) of an electric machine (1) comprising:
- a rotor core (4) with slots (5), the rotor core (4) having a first diameter (drc),
- at least a cylindrical portion (10) extending from the rotor core having a second diameter (dp) smaller than the first diameter (drc),
- windings having:
- slot parts (6) housed in the slots (5), and
- end windings (7) arranged around the cylindrical portions (10),
wherein
- at least a cylindrical portion (10) has a plurality of seats (15),
- the seats (15) house supports (13) for the end windings (7),
- each support (13) includes at least:
- a first element (16) housed within a seat (15), and
- at least a further element (17, 18, 19) clamping at least an end winding (7),
- screws (20) tightening the supports (13), wherein each screw (20) comprises a rod (25) and a head (26),
**characterised in that**:
- the rod (25) has a first end (27), a second end (28) and a central portion (29) between them,
- the head (26) is made in a separate piece from the rod (25),
- the first end (27) of the rod (25) is threaded,
- a terminal part (30) of the first end (27) facing away from the second end (28) is not threaded,
- the head (26) has a threaded hole (31) and is screwed into the rod first end (27).

9. Rotor (3) according to claim 8, **characterised in that** a diameter (dfe) of the first end (27) is larger than the diameter (dcp) of the central portion (29).

10. Rotor (3) according to claim 8, **characterised in that** the central portion (29) is not threaded.

11. Rotor (3) according to claim 8, **characterised in that** the second end (28) is threaded.

12. Rotor (3) according to claim 8, **characterised in that** a diameter (dse) of the second end (28) is larger than the diameter (dcp) of the central portion (29).

13. Rotor (3) according to claim 9 and 12, **characterised in that** the diameter (dse) of the second end (28) is smaller than the diameter (dfe) of the first end (27).

14. Rotor (3) according to claim 8, **characterised in that** the rod (25) has a longitudinal axis (35) and **in that** a face (36) at the rod first end (27) intercepting the longitudinal axis (35) has at least a notch (34).
